# EUROPÄISCHE PATENTSCHRIFT

(11) **EP 1 200 450 B1**
(45) Veröffentlichungstag und Bekanntmachung des Hinweises auf die Patenterteilung: **12.11.2003**
(21) Anmeldenummer: 00956426.1
(22) Anmeldetag: 10.08.2000
(51) Int. Cl.: C07F 9/38

(54) **VERFAHREN ZUR HERSTELLUNG VON PHOSPHONOMETHYLGLYCIN**
METHOD FOR THE PRODUCTION OF PHOSPHONOMETHYLGLYCINE
PROCEDE DE PREPARATION DE PHOSPHONOMETHYLGLYCINE

(30) Priorität: 11.08.1999 DE 19937959
(43) Veröffentlichungstag der Anmeldung: 02.05.2002
(73) Patentinhaber: BASF AKTIENGESELLSCHAFT, 67056 Ludwigshafen (DE)
(72) Erfinder: AUST, Nicola, Christiane, 68199 Mannheim (DE); BUTZ, Thomas, 68309 Mannheim (DE); FISCHER, Martin, 67071 Ludwigshafen (DE)
(74) Vertreter: Kinzebach, Werner, Dr.
(86) Internationale Anmeldenummer: EP0007809
(87) Internationale Veröffentlichungsnummer: WO01012640

(56) Entgegenhaltungen:
- EP-A- 0 439 445
- EP-A- 0 464 017
- EP-A- 0 464 018
- BR-A- 9 601 581

## Beschreibung

Die vorliegende Erfindung betrifft ein Verfahren zur Herstellung von Phosphonomethylglycin aus N-Phosphonomethyliminodiessigsäure-N-oxid.

Phosphonomethylglycin, das unter dem common name Glyphosate bekannt ist, ist eine hochwirksame phytotoxische Verbindung, die als Herbizid eingesetzt wird.

Die EP-A-439445 beschreibt die Herstellung von Phosphonomethylglycin ausgehend von N-Phosphonomethyliminodiessigsäure. Diese wird mit einem Peroxid in wäßriger Lösung, ggf. in Anwesenheit einer katalytisch wirkenden Menge einer wasserlöslichen Molybdän-Verbindung, zu dem Zwischenprodukt N-Phosphonomethyliminodiessigsäure-N-oxid oxidiert. Die Unwandlung des N-Oxids in Phosphonomethylglycin erfolgt anschließend in Anwesenheit einer katalytischen Menge einer Metabisulfit-Verbindung und einer wasserlöslichen Molybdän-Verbindung.

Auch die EP-A-464017 beschreibt ein Verfahren zur Herstellung von Phosphonomethylglycin ausgehend von Phosphonomethyliminodiessigsäure unter Anwendung der gleichen Verfahrensstufen. Die Oxidation zu dem erwähnten N-Oxid erfolgt mit einem Peroxid in Anwesenheit einer wasserlöslichen Molybdän- oder Wolfram-Verbindung. Die Umwandlung in Phosphonomethylglycin erfolgt dann unter Verwendung von Eisen, Zink, Aluminium, Vanadium oder Kupfer in Form des Metalles oder unter Verwendung eines Vanadium-, Eisen(II)-oder Kupfer(I)-Salzes als Katalysator.

Schließlich beschreibt auch die EP-A-464018 ein Verfahren zur Herstellung von Phosphonomethylglycin, wobei die Oxidation der phosphonomethyliminodiessigsäure mit einem Peroxid in Anwesenheit einer wasserlöslichen Wolfram-Verbindung oder eines Gemisches aus einer wasserlöslichen Wolfram- und Molybdän-Verbindung als Katalysator vorgenommen wird. Das N-Oxid wird dann mit Eisenmetall, einer wasserlöslichen Vanadium-Verbindung, einem Eisen(II)-Salz oder einem Gemisch aus einer wasserlöslichen Sulfid-, Sulfitoder Bisulfit-Verbindung und einer wasserlöslichen Molybdat-Verbindung in Kontakt gebracht und in Phosphonomethylglycin überführt.

Bei der Umwandlung des N-Oxids in Phosphonomethylglycin werden somit leicht reduzierbare Katalysatoren eingesetzt. Da zur Oxidation der N-Phosphonomethyliminodiessigsäure im allgemeinen ein Überschuß an Peroxid verwendet wird, kommt es zur Reaktion zwischen dem überschüssigen Peroxid und dem leicht oxidierbaren Katalysator, der dadurch zumindest teilweise unwirksam gemacht, wird.

Der vorliegenden Erfindung liegt daher die Aufgabe zugrunde, ein Verfahren zur Herstellung von Phosphonomethylglycin zur Verfügung zu stellen, das auch in Anwesenheit von Resten eines Oxidationsmittels rasch und in hoher Ausbeute und Selektivität Phosphonomethylglycin ergibt.

Überraschenderweise wurde nun gefunden, daß diese Aufgabe gelöst wird, wenn man die Reduktion von N-Phosphonomethyliminodiessigsäure-N-oxid mit Thiocyansäure oder einem Salz davon als Katalysator durchführt.

Gegenstand der vorliegenden Erfindung ist daher ein Verfahren zur Herstellung von Phosphonomethylglycin, wobei man N-Phosphonomethyliminodiessigsäure-N-Oxid mit einer katalytisch wirksamen Menge an Thiocyansäure oder einem Salz davon, gegebenenfalls in Anwesenheit eines Co-Katalysators, in Kontakt bringt.

Das N-Phosphonomethyliminodiesssigsäure-N-oxid ist bekannt und kann nach mehreren Verfahren hergestellt werden. Beispielsweise kann es gemäß US 3,950,402 oder US 3,954,848 oder gemäß HU 187,347 unter Verwendung von Peroxiden in Anwesenheit von Silber-, Eisen-, Zinn-, Blei-, Mangan- oder Molybdänverbindungen synthetisiert werden. Vorzugsweise jedoch wird das N-Oxid nach einem der in den Europäischen Patentanmeldungen EP 439445 A, EP 464017 A oder EP 464018 A beschriebenen Verfahren hergestellt. Dabei wird N-Phosphonomethyliminodiesssigsäure mit einem Peroxid, wie Wasserstoffperoxid, Perameisensäure, Peressigsäure, Perbenzoesäure, Peroxitrifluoressigsäure, Benzoylperoxid, Benzolpersulfonsäure etc., in Kontakt gebracht. Vorzugsweise verwendet man Wasserstoffperoxid, insbesondere in zumindest stöchiometrischen Mengen, bezogen auf N-Phosphonomethyliminodiessigsäure. Das Wasserstoffperoxid wird im allgemeinen in einer Konzentration im Bereich von 10 bis 70 Gew.-%, insbesondere 30 bis 70 Gew.-% eingesetzt. Die Reaktionstemperatur liegt im allgemeinen im Bereich von etwa 0°C bis 80°C, insbesondere etwa 20°C bis etwa 70°C.

Besonders bevorzugt erfolgt die Oxidation von N-Phosphonomethyliminodiessigsäure in Anwesenheit einer katalytischen Menge einer wasserlöslichen Molybdänverbindung oder einer wasserlöslichen Wolframverbindung oder eines Gemisches davon. Geeignete Molybdänverbindungen sind dem Fachmann bekannt, es ist lediglich erforderlich, daß sie in dem Reaktionsmedium löslich sind. Brauchbare Molybdänverbindungen sind beispielsweise Alkalimetallmolybdate, wie Natriummolybdat, Ammoniummolybdat oder Alkalimetall- oder Ammoniumpolymolybdate, wie Ammonium- oder Natriumdimolybdat.

Auch geeignete Wolframverbindungen sind dem Fachmann bekannt, sie müssen lediglich in dem Reaktionsmedium löslich sein. Brauchbare Wolframverbindungen sind beispielsweise Wolframsäure, 1,2-Wolframatophosphat und Bariumwolframat. Ammoniumwolframat und Alkalimetallwolframate, wie Natriumwolframat, Kaliumwolframat, sind bevorzugt.

Die Menge an Katalysator kann innerhalb weiter Grenzen variieren. Im allgemeinen verwendet man etwa 0,01 bis etwa 5,0 Gew.-%, vorzugsweise etwa 0,01 bis etwa 3,0 Gew.-%, Katalysator, bezogen auf das Gewicht an N-Phosphonomethyliminodiessigsäure.

Das Peroxid wird im allgemeinen in zumindest stöchiometrischen Mengen eingesetzt. Vorzugsweise verwendet man einen geringen Überschuß, insbesondere etwa 1,02 bis 1,20 Molequivalente, besonders bevorzugt 1,05 bis 1,15 Molequivalente, bezogen auf die Menge an Phosphonomethyliminodiessigsäure.

Die Oxidation der N-Phosphonomethyliminodiessigsäure erfolgt in wäßrigem Medium, wobei die N-Phosphonomethyliminodiessigsäure zunächst in Suspension vorliegt und im Laufe der Oxidation zumindest teilweise in Lösung geht. Zweckmäßigerweise setzt man die N-Phosphonomethyliminodiessigsäure in hoher Konzentration ein, beispielsweise in Form einer bis zu 60 gew.-%igen, insbesondere bis zu 50 gew.-%igen wäßrigen Suspension. Vorzugsweise setzt man die N-Phosphonomethyliminodiessigsäure in solcher Menge ein, daß nach beendeter Oxidation eine Lösung vorliegt. Der Übergang von der Suspension in die Lösung zeigt an, daß die Oxidationsreaktion im wesentlichen beendet ist, weil das N-Oxid in Wasser wesentlich besser löslich ist als die N-Phosphonomethyliminodiessigsäure.

Die Umwandlung des N-Oxids in das gewünschte Phosphonomethylglycin erfolgt vorzugsweise ausgehend von einer wäßrigen Lösung des N-Oxids. Als Katalysator verwendet man Thiocyansäure oder ein Salz davon, bei dem es sich vorzugsweise um ein wasserlösliches Salz handelt. Die Thiocyansäure, die bei der Reaktionstemperatur gasförmig vorliegt, kann in Form einer wäßrigen Lösung oder als Gas, ggf. verdünnt mit einem Inertgas, wie Stickstoff, eingesetzt werden. Vorzugsweise verwendet man als Katalysator jedoch ein Salz der Thiocyansäure, insbesondere ein Alkalimetallsalz, wie Natrium- oder Kaliumthiocyanat. Auch der Katalysator kommt bevorzugt in Form einer wäßrigen Lösung zur Anwendung.

Vorzugsweise erfolgt die Umwandlung des N-Oxids in Phosphonomethylglycin in Anwesenheit eines Co-Katalysators, um die Umwandlungsrate zu erhöhen. Geeignete Co-Katalysatoren sind beispielsweise wasserlösliche wie Vanadiumsalze, wie Vanadylsulfat, oder wasserlösliche Eisen(II)-salze wie Eisen(II)-sulfat oder -chlorid. Bevorzugt verwendet man als Cokatalysator jedoch eine wasserlösliche Molybdänverbindung, wie Ammonium- oder ein Alkalimetallmolybdat, wie Natriummolybdat oder ein Ammonium- oder Alkalimetallpolymolybdat, wie Ammonium- oder Natriumdimolybdat. Besonders bevorzugt ist es, für die Oxidation der N-Phosphonomethyliminodiessigsäure und für die anschließende Umwandlung des N-Oxids den gleichen Katalysator zu verwenden, insbesondere eine der erwähnten Molybdänverbindungen.

Die Menge an Thiocyansäure oder einem Salz davon ist unabhängig von der für die Oxidation der N-Phosphonomethyliminodiessigsäure eingesetzten Peroxidmenge, weil die Wirkung der Thiocyansäure oder der Salze davon unter den Reaktionsbedingungen von etwaigem überschüssigem Peroxid nicht beeinträchtigt wird. Im allgemeinen verwendet man jedoch wenigstens 0,01 Gew.-%, bezogen auf die Menge an N-Oxid. In der Regel setzt man nicht mehr als 10 Gew.-%, vorzugsweise nicht mehr als 8 Gew.-%, bezogen auf das N-Oxid, an Katalysator ein. Bevorzugt liegt die Menge im Bereich von 0,01 Gew.-% bis etwa 6,0 Gew.-%, und insbesondere im Bereich von 0,1 bis 5 Gew.-%, bezogen auf das N-Oxid.

Die Menge an Cokatalysator liegt im allgemeinen im Bereich von etwa 0,01 bis etwa 30 Mol-%, vorzugsweise etwa 0,05 bis etwa 10 Mol-%, bezogen auf das N-Oxid. Falls für die Herstellung des N-Oxids und für dessen Umwandlung in Phosphonomethylglycin der gleiche Katalysator verwendet wird, insbesondere eine wasserlösliche Molybdänverbindung, wird der Katalysator nach der Oxidation nicht aus der Reaktionsmischung entfernt, so daß für die anschließende Umwandlungsreaktion kein Co-Katalysator mehr zugegeben werden muß.

Die Reaktionstemperatur für die Umwandlung des N-Oxids in Phosphonomethylglycin liegt im allgemeinen im Bereich von 10°C bis 100°C, insbesondere 30°C bis 80°C und vorzugsweise 35°C bis 70°C. Für die Umwandlungsreaktion kann das N-Oxid mit dem Katalysator in üblicher weise in einem Reaktionsraum in Kontakt gebracht werden. Vorzugsweise führt man die Reaktion jedoch so durch, daß man eine wäßrige Lösung, die zumindest einen Teil des Katalysators und gegebenenfalls einen Teil des N-Oxids enthält, z.B. bis zu 20% oder bis zu 10%, vorlegt und eine wäßrige Lösung des N-Oxids zudosiert.

Unter "Zudosieren" ist hier zu verstehen, dass das N-Oxid allmählich, d.h. zeitlich kontrolliert, in den Reaktionsraum gegeben und dort mit dem Katalysator, insbesondere in Form einer wäßrigen Lösung, in Kontakt gebracht wird. Dies kann z.B. dadurch erfolgen, daß man die N-Oxidlösung allmählich zulaufen läßt oder in kleinen Anteilen nach und nach zugibt.

Der Katalysator kann teilweise oder vollständig im Reaktionsraum vorgelegt werden. Falls nur ein Teil des Katalysators vorgelegt wird, kann der Rest ebenfalls in den Reaktionsraum dosiert werden und zwar gleichzeitig oder zeitlich versetzt zum N-Oxid. Alternativ kann der gesamte Katalysator in den Reaktionsraum dosiert werden und zwar ebenfalls gleichzeitig oder zeitlich versetzt zum N-Oxid.

Bei der Umsetzung muß jedoch stets sichergestellt sein, daß mindestens 50%, bevorzugt mindestens 70%, besonders bevorzugt mindestens 90% des in den Reaktionsraum dosierten N-Oxids umgewandelt sind. Die Umwandlungsrate läßt sich leicht anhand der bei der Umwandlung freigesetzten Kohlendioxidmenge bestimmen. Die Zudosierung des N-Oxids erfolgt demnach so, daß mindestens 50%, bevorzugt 70% und besonders bevorzugt 90% der erwarteten bei der Umwandlungsreaktion anfallenden und der bereits zugegebenen N-Oxid Menge entsprechenden Menge Kohlendioxid mit einer nur geringen Verzögerung, im allgemeinen maximal 15 Minuten, freigesetzt werden, bevor weitere Anteile der N-Oxid-Lösung zugegeben werden. Dies wird in der Regel erreicht, indem man darauf achtet, daß mindestens 0,01 Mol-% Katalysator, bezogen auf das bereits zudosierte N-Oxid, im Reaktionsgemisch vorhanden sind. Falls die Kohlendioxidentwicklung im Laufe der Umwandlungsreaktion sich verlangsamt oder zum Erliegen kommt, kann man dem Reaktionsgemisch weiteren Katalysator zufügen, oder falls ein Teil des Katalysators zudosiert wird, ihn schneller zudosieren.

Der Cokatalysator kann in gleicher weise wie der Katalysator mit dem N-Oxid in Kontakt gebracht werden.

Bei der Umwandlungsreaktion fällt das Phosphonomethylglycin als Feststoff aus, wenn eine Konzentration von etwa 1,0 Gew.-% im Reaktionsgemisch überschritten wird. Die Reaktion wird zweckmäßigerweise daher so durchgeführt, daß der größte Teil des Phosphonomethylglycins als Feststoff anfällt. Dies ist in der Regel der Fall, wenn man das N-Oxid in einer Konzentration von mindestens 20 Gew.-%, bezogen auf das Gesamtgewicht des Reaktionsgemisches, einsetzt.

Die Abtrennung des Phosphonomethylglycins aus der erhaltenen Suspension kann nach den üblichen Techniken der Feststoffisolierung erfolgen. Zweckmäßigerweise wird vor der Abtrennung auf < 30°C, insbesondere auf 10 bis 20°C abgekühlt und/oder 1 bis 20 h gerührt. Die nach Abtrennung des Phosphonomethylglycins verbleibende Mutterlauge, die noch gelöstes Phosphonomethylglycin und den Katalysator enthält, kann zumindest teilweise für die Umwandlung von weiterem N-Oxid eingesetzt werden.

Sowohl die Herstellung des N-Oxids als auch die anschließende Umwandlung des N-Oxids in Phosphonomethylglycin können als Batch, Semibatch (Zudosierung von Wasserstoffperoxid bzw. von N-Oxidlösung und gegebenenfalls eines Teils des Katalysators) oder kontinuierlich (gleichzeitige Dosierung aller Komponenten, nämlich N-Phosphonomethyliminodiessigsäure, Oxidationsmittel und gegebenenfalls Katalysator bzw. N-Oxid, Katalysator und gegebenenfalls Cokatalysator) durchgeführt werden.

Die nachfolgenden Beispiele erläutern die Erfindung ohne sie zu begrenzen.

### Beispiel 1:

38 g N-Phosphonomethyliminodiessigsäure und 0,92 g Ammoniummolybdat-Tetrahydrat werden in 100 ml wasser suspendiert und auf 65°C erwärmt. Man läßt anschließend innerhalb von 30 min 20,6g 30%ige Wasserstoffperoxid-Lösung zutropfen und rührt eine Stunde bei 65°C nach, wobei sich eine klare Lösung bildet. Zu der gebildeten N-Oxid-Lösung werden bei 40°C 1,6 g Kaliumrhodanid, gelöst in 10 ml Wasser, zugetropft. Man beobachtet eine heftige Gasentwicklung. Es wird noch 1 h bei 40°C gerührt und bei Raumtemperatur wird anschließend der ausgefallene Niederschlag abfiltriert und getrocknet. Auf diese Weise können 20,9 g N-Phosphonomethylglycin mit einer Reinheit von 98% isoliert werden. Dies entspricht einer Ausbeute von 72%, bezogen auf die eingesetzte Menge N-Phosphonomethyliminodiessigsäure.

### Beispiel 2:

60 g N-Phosphonomethyliminodiessigsäure und 1,23 g Ammoniummolybdat-Tetrahydrat werden in 75 ml wasser suspendiert und auf 55°C erwärmt. Man lässt anschließend 19,8 g 50%ige Wasserstoffperoxid-Lösung in 15 min zutropfen und rührt 1,5 h bei 65°C nach, wobei sich eine klare Lösung bildet. Im nächsten Schritt werden 0,5 ml 20%ige Kaliumthiocyanat-Lösung und 15% der hergestellten N-Oxid-Lösung bei 40°C vorgelegt. Dann wird N-Oxid so zugetropft, dass die gebildete CO₂-Molmenge ca. 70% der zugetropften N-Oxid-Molmenge entspricht. Beispielsweise haben sich nach Zulauf von insgesamt 30% der N-Oxid-Lösung 2 1 CO₂ gebildet. Durch diese Dosierweise wird verhindert, dass sich N-Oxid in der Lösung anreichert. Verlangsamt sich die CO₂-Entwicklung, wird Kaliumthiocyanat-Lösung so zugegeben, dass die gebildete CO₂-Menge wiederum ca. 70% des zugetropften N-Oxids entspricht. Auf diese weise wird CO₂ kontinuierlich freigesetzt. Nachdem die gesamte N-Oxid-Lösung und 4,5 ml Kaliumthiocyanat-Lösung in 1,5 h zugetropft worden sind, ist nach weiteren 15 min keine Gasentwicklung mehr zu beobachten. Insgesamt haben sich 4,6 1 CO₂ gebildet. Die Lösung wird auf Raumtemperatur abgekühlt und der ausgefallene Niederschlag wird abgesaugt und getrocknet. Es werden 35,5 g reines N-Phosphonomethylglycin isoliert, was einer Ausbeute von 80%, bezogen auf die eingesetzte Menge N-Phosphonomethyliminodiessigsäure, entspricht.

### Beispiel 3:

37 g N-Phosphonomethyliminodiessigsäure und 0,72 g Ammoniummolybdat-Tetrahydrat werden in 40 ml Wasser suspendiert und auf 55°C erwärmt. Man läßt anschließend 11,6 g 50%ige Wasserstoffperoxid-Lösung zutropfen und rührt 1,5 h bei 65°C nach, wobei sich eine klare N-Oxid-Lösung bildet. Im nächsten Schritt werden 0,5 ml der Mutterlauge aus Beispiel 2 und 15 ml der hergestellten N-Oxid-Lösung vorgelegt und anschließend wird N-Oxid-Lösung zugetropft. Bildet sich kein CO₂ mehr, wird zusätzlich in 1 ml Schritten Mutterlauge zugegeben. Nachdem die gesamte N-Oxid-Lösung und 22 ml Mutterlauge zugetropft worden sind und anschließend keine Gasentwicklung mehr zu beobachten ist, wird die Lösung abgekühlt. Der ausgefallene Niederschlag wird abgesaugt und getrocknet. Es werden 23,5 g reines N-Phosphonomethylglycin isoliert, was einer Ausbeute von 85%, bezogen auf die eingesetzte Menge N-Phosphonomethyliminodiessigsäure entspricht.

### Beispiel 4:

190 g N-Phosphonomethyliminodiessigsäure und 4,2 g Ammoniummolybdat-Tetrahydrat werden in 300 ml wasser suspendiert. Man tropft innerhalb einer Stunde bei 65°C 66 g 50%ige Wasserstoffperoxid-Lösung zu und rührt anschließend noch 45 min bei 65°C, wobei sich eine klare Lösung bildet. Diese N-Oxid-Lösung wird während 2 h in eine Vorlage aus 0,64 g Ammoniumrhodanid in 100 ml Wasser bei 40°C unter stetiger Gasentwicklung zugetropft. Schon im Verlauf der N-Oxid-Dosierung fällt ein farbloser Niederschlag aus. Insgesamt bilden sich während der Fragmentierung 17,1 1 Gas. Das Reaktionsgemisch wird anschließend auf 10°C abgekühlt, der entstandene Niederschlag wird abgesaugt und getrocknet. 110,6 g N-Phosphonomethylglycin mit einer Reinheit von 99% werden isoliert. Eine Nachfällung in der Mutterlauge ergibt weitere 11,1 g reines N-Phosphonomethylglycin. Damit ergibt sich eine Gesamtausbeute von 85%, bezogen auf die eingesetzte Menge N-Phosphonomethyliminodiessigsäure.

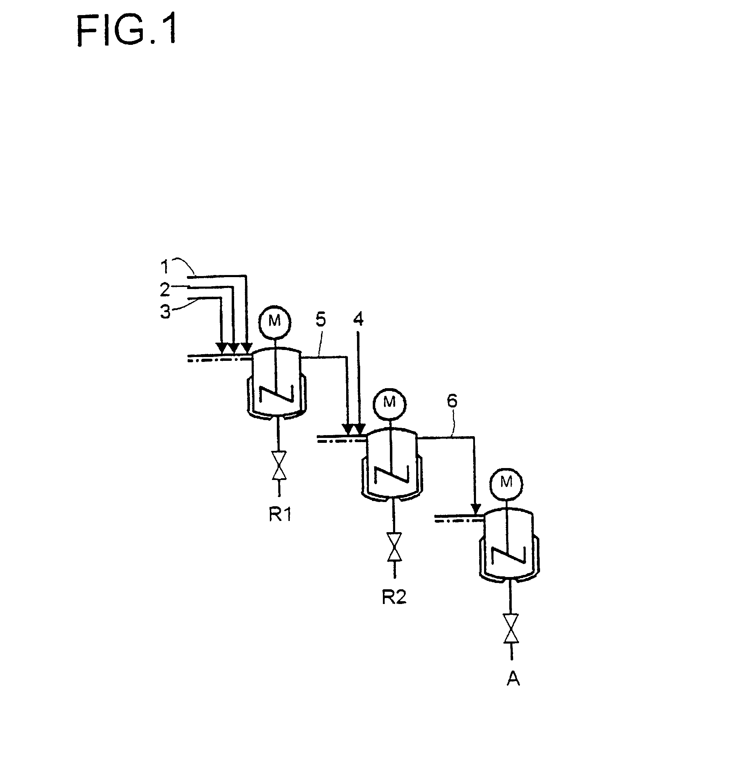

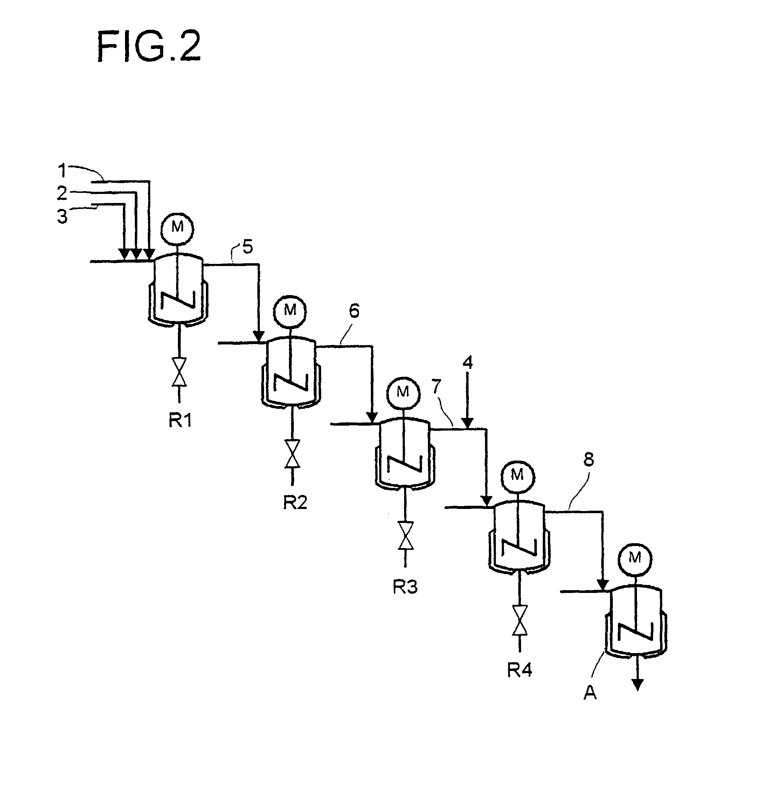

In den nachfolgenden Beispielen 5 und 6 wird das erfindungsgemäße Verfahren in halbtechnischem und technischem Maßstab unter Bezug auf die Figuren 1 und 2 erläutert. Die Figuren zeigen eine schematisierte Apparatur zur Durchführung des Verfahrens, wobei für das Verfahren nicht wesentliche Teile weggelassen wurden.

### Beispiel 5:

Eine Rührkesselkaskade (vgl. Fig. 1), bestehend aus zwei hintereinander geschalteten, heiz- und kühlbaren Rührbehältern mit einem Reaktionsvolumen von 1,0 dm³ (R1) bzw. 2,0 dm³ (R2) und einem thermostatisierten Austragsgefäß A, wurde wie folgt beschickt:

| Strom | Einsatzstoff | Menge [g/h] | Form |
|---|---|---|---|
| (1) | PMIDA¹⁾ | 163 | Suspension (30%ig) |
| | H₂O | 375 | |
| (2) | (NH₄)₆Mo₇O₂₄ x 4 H₂O | 3,2 | Lösung (20%ig) |
| | H₂O | 12,8 | |
| (3) | H₂O₂ | 24,6 | Lösung (50%ig) |
| | H₂O | 24,6 | |
| (4) | NH₄SCN | 0,7 | Lösung (10%ig) |
| | H₂O | 6,5 | |

| | | | |
|---|---|---|---|
| ¹⁾ Phosphonomethyliminodiessigsäure | | | |

In den ersten Reaktor R1 wurden bei 65,0 ± 1,0°C kontinuierlich die Ströme (1), (2) und (3) gepumpt. Über einen Überlauf 5 lief die dabei entstandene, nahezu klare Lösung des Phosphonomethyliminodiessigsäure-N-Oxids in den Reaktor R2, in den bei 32,0 ± 2,0°C ebenfalls kontinuierlich Strom 4 zugepumpt wurde. Von dort lief die entstehende Suspension mit Glyphosate als Wertprodukt über den Überlauf 6 in das auf 5°C temperierte Austragsgefäß A über, welches stündlich geleert wurde. Der im Austrag enthaltene Feststoff wurde abfiltriert, mit wenig wasser gewaschen und bei 40°C getrocknet. Im Mittel bildete sich 91,1 g/h Glyphosate in einer Reinheit > 90% (HPLC).

### Beispiel 6:

Eine Rührkesselkaskade (vgl. Fig. 2), bestehend aus vier hintereinander geschalteten, heiz- und kühlbaren Rührbehältern R1, R2, R3 und R4 mit einem Reaktionsvolumen von je 700 1 und einem Austragsgefäß A, wurde wie folgt beschickt:

| Strom | Einsatzstoff | Menge [kg/h] | Form |
|---|---|---|---|
| (1) | PMIDA | 102,2 | Suspension (27%ig) |
| | H₂O | 280,6 | |
| (2) | (NH₄)₆Mo₇O₂₄ x 4 H₂O | 2,2 | Lösung (20%ig) |
| | H₂O | 8,8 | |
| (3) | H₂O₂ | 17,6 | Lösung (50%ig) |
| | H₂O | 17,6 | |
| (4) | NH₄SCN | 0,3 | Lösung (10%ig) |
| | H₂O | 3,1 | |

In den ersten Reaktor R1 wurden bei 65,0 ± 1,0°C kontinuierlich die Ströme (1), (2) und (3) gepumpt. Über einen Überlauf 5 lief die dabei entstandene Reaktionsmischung in einen Nachreaktor R2, der auf gleicher Temperatur gehalten wurde. In einem dritten Reaktor R3 wurde bei 32,0 ± 2,0°C zu der aus R2 über den Überlauf 6 überlaufenden, nahezu klaren Lösung des Phosphonomethyliminodiessigsäure-N-Oxids kontinuierlich Strom 4 zugepumpt. Von dort lief die entstehende Suspension mit Glyphosate als Wertprodukt über die Überläufe 7 und 8 über einen weiteren Nachreaktor R4 in ein auf 5°C temperierte Austragsgefäß A über, welches stündlich geleert wurde. Der im Austrag enthaltene Feststoff wurde abfiltriert, mit wenig Wasser gewaschen und bei 40°C getrocknet. Im Mittel bildeten sich 64,2 kg/h Glyphosate in einer Reinheit > 90% lt. HPLC (Umsatz: > 99%, Ausbeute: 76%).

## Patentansprüche

1. Verfahren zur Herstellung von N-Phosphonomethylglycin, wobei man N-Phosphonomethyliminodiessigsäure-N-oxid mit einer katalytisch wirksamen Menge an Thiocyansäure oder einem Salz davon in Kontakt bringt.

2. Verfahren nach Anspruch 1, wobei man das N-Phosphonomethyliminodiessigsäure-N-oxid mit Ammoniumthiocyanat oder einem Alkalimetallsalz der Thiocyansäure in Kontakt bringt.

3. Verfahren nach Anspruch 1 oder 2, wobei man zusätzlich einen Co-Katalysator einsetzt.

4. Verfahren nach Anspruch 3, wobei man als Co-Katalysator eine wasserlösliche Molybdänverbindung, insbesondere Ammoniummolybdat oder ein Alkalimetallmolybdat, verwendet.

5. Verfahren nach einem der vorhergehenden Ansprüche, wobei man die Umsetzung bei einer Temperatur im Bereich von 10°C bis 100°C durchführt.

6. Verfahren nach einem der vorhergehenden Ansprüche, wobei die Herstellung des N-Phosphonomethyliminodiessigsäure-N-oxids durch Oxidation von N-Phosphonomethyliminodiessigsäure erfolgt.

7. Verfahren nach Anspruch 6, wobei man die Oxidation mit einer Peroxid-Verbindung durchführt.

8. verfahren nach Anspruch 7, wobei die Oxidation in Anwesenheit eines Katalysators, insbesondere einer wasserlöslichen Molybdänverbindung, erfolgt.

9. Verfahren nach Anspruch 8, wobei man als Katalysator für die Oxidation der N-Phosphonomethyliminodiessigsäure und als Co-Katalysator für die Umwandlung des N-Oxids den gleichen Katalysator verwendet.

10. Verfahren nach einem der vorhergehenden Ansprüche, wobei man N-Phosphonomethyliminodiessigsäure mit einer Peroxidverbindung in Anwesenheit einer katalytisch wirksamen Menge einer wasserlöslichen Molybdänverbindung zu N-Phosphonomethyliminodiessigsäure-N-oxid oxidiert und das Reaktionsgemisch anschließend mit Thiocyansäure oder einem Salz davon in Kontakt bringt.

## Claims

1. A process for the preparation of N-phosphonomethylglycine, wherein N-phosphonomethyliminodiacetic acid N-oxide is brought into contact with a catalytically effective amount of thiocyanic acid or a salt thereof.

2. A process as claimed in claim 1, wherein the N-phosphonomethyliminodiacetic acid N-oxide is brought into contact with ammonium thiocyanate or an alkali metal salt of thiocyanic acid.

3. A method as claimed in claim 1 or 2, wherein a cocatalyst is additionally employed.

4. A method as claimed in claim 3, wherein the cocatalyst employed is a water-soluble molybdenum compound, in particular ammonium molybdate or an alkali metal molybdate.

5. A process as claimed in any of the preceding claims, wherein the reaction is carried out at a temperature in the range of 10°C to 100°C.

6. A process as claimed in any of the preceding claims, wherein the N-phosphonomethyliminodiacetic acid N-oxide is prepared by oxidizing N-phosphonomethyliminodiacetic acid.

7. A process as claimed in claim 6, wherein the oxidation is carried out with a peroxide compound.

8. A process as claimed in claim 7, wherein the oxidation is carried out in the presence of a catalyst, in particular a water-soluble molybdenum compound.

9. A process as claimed in claim 8, wherein the same catalyst is used as the catalyst for oxidizing the N-phosphonomethyliminodiacetic acid and as cocatalyst for converting the N-oxide.

10. A process as claimed in any of the preceding claims, wherein N-phosphonomethyliminodiacetic acid is oxidized with a peroxide compound in the presence of a catalytically effective amount of a water-soluble molybdenum compound to give N-phosphonomethyliminodiacetic acid N-oxide and the reaction mixture is subsequently brought into contact with thiocyanic acid or a salt thereof.

## Revendications

1. Procédé de préparation de N-phosphonométhylglycine, dans lequel on met en contact le N-oxyde de l'acide N-phosphonométhyliminodiacétique avec une quantité catalytiquement active d'acide thiocyanique ou d'un sel de celui-ci.

2. Procédé selon la revendication 1, dans lequel on met en contact le N-oxyde de l'acide N-phosphonométhyliminodiacétique avec du thiocyanate d'ammonium ou avec un sel de métal alcalin de l'acide thiocyanique.

3. Procédé selon la revendication 1 ou 2, dans lequel on met en oeuvre en outre un co-catalyseur.

4. Procédé selon la revendication 3, dans lequel on utilise, en tant que co-catalyseur, un composé hydrosoluble du molybdène, en particulier le molybdate d'ammonium ou un molybdate de métal alcalin.

5. Procédé selon l'une quelconque des revendications précédentes, dans lequel la réaction est effectuée à une température de 10 à 100°C.

6. Procédé selon l'une quelconque des revendications précédentes, dans lequel la préparation du N-oxyde de l'acide N-phosphonométhyliminodiacétique est effectuée par oxydation de l'acide N-phosphonométhyliminodiacétique.

7. Procédé selon la revendication 6, dans lequel l'oxydation est effectuée à l'aide d'un composé peroxyde.

8. Procédé selon la revendication 7, dans lequel l'oxydation est effectuée en présence d'un catalyseur, en particulier d'un composé hydrosoluble du molybdène.

9. Procédé selon la revendication 8, dans lequel, comme catalyseur pour l'oxydation de l'acide N-phosphonométhyliminodiacétique et comme co-catalyseur pour la transformation du N-oxyde on utilise le même catalyseur.

10. Procédé selon l'une quelconque des revendications précédentes, dans lequel l'acide N-phosphonométhyliminodiacétique est oxydé en N-oxyde de l'acide N-phosphonométhyiiminodiacétique à l'aide d'un composé peroxyde en présence d'une quantité catalytiquement active d'un composé hydrosoluble du molybdène et le mélange réactionnel est mis ensuite en contact avec de l'acide thiocyanique ou avec un sel de celui-ci.
